# EUROPÄISCHE PATENTSCHRIFT

(11) **EP 1 335 815 B1**
(45) Veröffentlichungstag und Bekanntmachung des Hinweises auf die Patenterteilung: **23.02.2011**
(21) Anmeldenummer: 01967017.3
(22) Anmeldetag: 24.08.2001
(51) Int. Cl.: B25F 5/00, B25F 5/02, F16F 15/023

(54) **HANDWERKZEUGMASCHINENHANDGRIFF**
GRIP HANDLE FOR HAND-HELD MACHINE TOOL
POIGNEE DE MACHINE PORTABLE

(30) Priorität: 09.11.2000 DE 10055395
(43) Veröffentlichungstag der Anmeldung: 20.08.2003
(73) Patentinhaber: ROBERT BOSCH GMBH, 70442 Stuttgart (DE)
(72) Erfinder: EICHER, Bernhard, 70794 Filderstadt (DE)
(74) Vertreter: Daub, Thomas
(86) Internationale Anmeldenummer: PCT/DE2001/003247
(87) Internationale Veröffentlichungsnummer: WO 2002/038341

(56) Entgegenhaltungen:
- EP-A- 0 995 553
- FR-A- 2 450 384
- US-A- 2 061 806
- US-A- 4 236 310
- US-A- 4 421 181
- US-A- 5 413 318

## Beschreibung

### Stand der Technik

Die Erfindung geht aus von einem System aus einem Handwerkzeugmaschinenhandgriff und einer Werkzeugmaschine nach dem Oberbegriff des Anspruchs 1 (Siehe z.B. US-A-2 061 806 auf die der Oberbegriff des Anspruchs 1 basiert).

Aus der DE 40 00 861 C2 ist eine Handwerkzeugmaschine bekannt, und zwar eine Schlagbohrmaschine mit einem gattungsbildenden Handwerkzeugmaschinenhandgriff. Die Schlagbohrmaschine besitzt ein Motorgehäuse, das auf der einer Werkzeugaufnahme abgewandten Seite der Schlagbohrmaschine von einem Hüllgehäuse umgeben ist. An das Hüllgehäuse ist ein Handgriff mit einem Griffelement angeformt. Das Hüllgehäuse ist über eine Schwingungsdämpfungseinheit mit dem Motorgehäuse verbunden, das gleichzeitig ein Trägerelement für den Handgriff bildet. Die Schwingungsdämpfungseinheit weist mehrere elastische Dämpfungselemente aus Gummi auf, über die das Hüllgehäuse und damit das Griffelement vom Motorgehäuse schwingungsmäßig entkoppelt ist.

### Vorteile der Erfindung

Da das Griffelement über eine berührungslose formschlüssige Verbindung am Trägerelement gesichert ist.

Kann sichergestellt werden, daß bei einem Defekt des Gaspolsters und/oder bei einem Druckabfall im Gaspolster die Werkzeugmaschine weiterhin über den Werkzeugmaschinenhandgriff geführt werden kann und an dieser verliersicher gehalten ist.

### Zusätzliche Vorteile

In einem Gaspolster stellt sich eine gleichmäßige Druckverteilung ein, wodurch eine vorteilhafte Führung über den Handgriff erreicht werden kann. Ferner kann der Gasdruck im Gaspolster konstruktiv einfach einstellbar ausgeführt werden, und zwar insbesondere indem das Gaspolster mit einem Ventil ausgeführt ist. Der Gasdruck kann an verschiedene Anwendungsfälle vorteilhaft angepaßt und es kann stets eine hohe wunschgemäße Dämpfung sichergestellt werden.

Im Gaspolster können verschiedene, dem Fachmann als sinnvoll erscheinende Gase verwendet werden, besonders vorteilhaft wird jedoch Luft verwendet, die in der Regel zur Verfügung steht und bei Leckage zu keiner Umweltbelastung führt.

Der Gasdruck im Gaspolster kann durch eine separate Pumpe oder durch einen separaten Druckanschluß, insbesondere einen Luftdruckanschluß, verändert werden. Bei besonders hochwertigen Werkzeugmaschinen, kann es jedoch auch sinnvoll sein, daß der Gasdruck im Gaspolster mit einer in der Werkzeugmaschine und/oder im Handgriff integrierten Pumpe veränderbar ist. Ohne Zusatzwerkzeuge kann der Gasdruck des Gaspolsters schnell und einfach an vorliegende Bedürfnisse angepaßt werden. Die Pumpe kann manuell von einem Bediener oder von einer Antriebseinheit angetrieben sein, wodurch ein hoher Komfort erreichbar ist. Die Pumpe wird dabei vorteilhaft von einer Antriebseinheit der Werkzeugmaschine angetrieben, wodurch zusätzliche Bauteile, Bauraum, Gewicht und Kosten eingespart werden können.

Die erfindungsgemäße Lösung kann besonders vorteilhaft bei Haupthandgriffen angewendet werden, deren Griffelement in der Regel an einem einer Werkzeugaufnahme gegenüberliegenden Ende der Werkzeugmaschine angeordnet ist und über die häufig ein Großteil einer erforderlichen Vortriebskraft von einem Bediener eingeleitet wird und die einen Hauptschwingungsüberträger an den Bediener darstellen.

Da das Griffelement an ein Hüllgehäuse angeformt und das von einem Gaspolster gebildete Schwingungsdämpfungselement in einem Bereich angeordnet ist, in dem sich das Hüllgehäuse und ein Gehäuseteil der Werkzeugmaschine überlappen, wobei das Hüllgehäuse über das Gehäuseteil der Werkzeugmaschine und/oder das Gehäuseteil über das Hüllgehäuse greifen kann, insbesondere an einem einer Werkzeugaufnahme gegenüberliegend angeordneten Griffelement, kann auf diese Weise konstruktiv einfach eine Entkopplung erreicht werden, ohne von einer herkömmlichen Form der Werkzeugmaschine abweichen zu müssen. Ferner kann das Gaspolster zwischen dem Gehäuseteil und dem Hüllgehäuse vorteilhaft geschützt vor äußeren Einflüssen integriert werden.

Ist das von einem Gaspolster gebildete Schwingungsdämpfungselement ringförmig ausgeführt, kann mit nur einem Schwingungsdämpfungselement eine Dämpfung vorteilhaft in verschiedene Richtungen erreicht und es können insgesamt Dämpfungselemente eingespart werden.

Die erfindungsgemäße Lösung kann bei verschiedenen, dem Fachmann als sinnvoll erscheinenden Werkzeugmaschinen angewendet werden, jedoch besonders vorteilhaft bei elektrisch angetriebenen Handwerkzeugmaschinen, wie beispielsweise Schlagbohrmaschinen, Schabern, Sägen, Schraubern und insbesondere Winkelschleifern usw., die aufgrund ihrer meist freien Beweglichkeit und häufig hohen Antriebsdrehzahlen grundsätzlich zu Schwingungen neigen.

### Zeichnung

Weitere Vorteile ergeben sich aus der folgenden Zeichnungsbeschreibung. In der Zeichnung sind Ausführungsbeispiele der Erfindung dargestellt.

Es zeigen:
- Fig. 1: einen schematisch dargestellten Winkelschlei- fer von oben,
- Fig. 2: einen Teilschnitt entlang der Linie II-II in Fig. 1 und
- Fig. 3: einen Teilschnitt entlang der Linie III-III in Fig. 1.

### Beschreibung der Ausführungsbeispiele

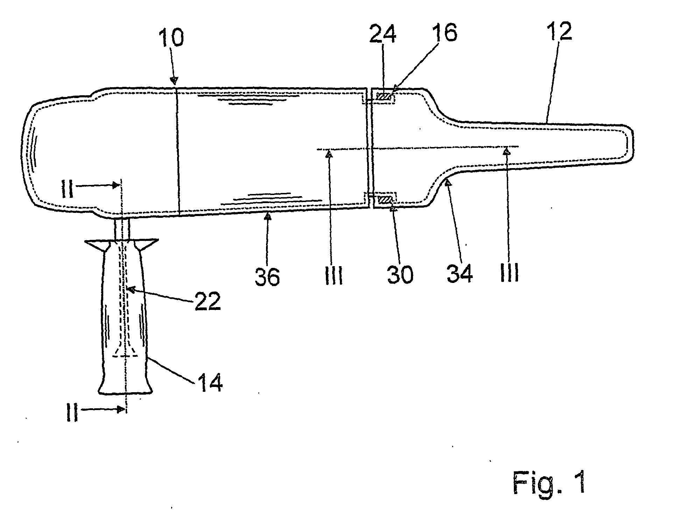

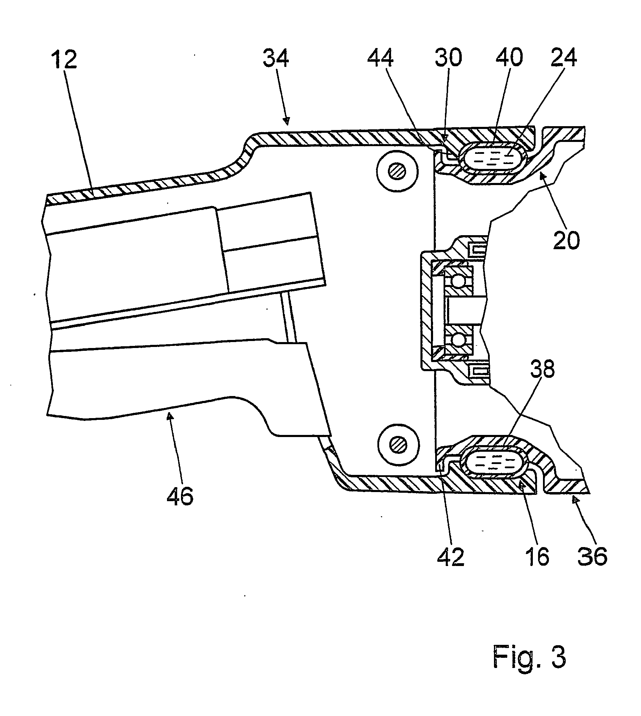

Fig. 1 zeigt einen Winkelschleifer 10 mit einem in einem Kunststoffgehäuseteil 36 gelagerten, nicht näher dargestellten Elektromotor, über den eine Werkzeughalterung für insbesondere eine Trennscheibe antreibbar ist. Der Winkelschleifer 10 besitzt an einem von der Werkzeughalterung abgewandten Ende ein Hüllgehäuse 34 aus Kunststoff, an das ein sich in Längsrichtung des Winkelschleifers 10 erstreckender Handgriff mit einem Griffelement 12 angeformt ist. Im Hüllgehäuse 34 ist ein Betätigungsschalter 46 zum Ein- und Ausschalten des Winkelschleifers 10 angeordnet (Fig. 3).

An das Gehäuseteil 36 ist an dem der Werkzeughalterung abgewandten Ende eine ein Trägerelement 20 bildende Verjüngung angeformt (Fig. 3). Das Hüllgehäuse 34 übergreift das Trägerelement 20 des Gehäuseteils 36. Das Gehäuseteil 36 und das Hüllgehäuse 34 sind über eine Schwingungsdämpfungseinheit 16 entkoppelt. Die Schwingungsdämpfungseinheit 16 besitzt erfindungsgemäß ein von einem ringförmigen Gaspolster 24 gebildetes Schwingungsdämpfungselement. Das Gaspolster 24 ist radial nach innen in einer sich über den gesamten Umfang des Trägerelements 20 bzw. des Gehäuseteils 36 erstreckenden Ringnut 38 im Trägerelement 20 und radial nach außen in einer entsprechenden zweiten Ringnut 40 im Hüllgehäuse 34 gelagert. Das Gaspolster 24 besitzt eine gasundurchlässige schlauchförmige Gummihülle mit einem nicht näher dargestellten Ventil, über das über einen separaten Luftdruckanschluß ein Gasdruck in der Gummihülle auf verschiedene Anwendungsfälle eingestellt werden kann.

Das Griffelement 12 bzw. das Hüllgehäuse 34 steht ausschließlich über das Gaspolster 24 mit dem Trägerelement 20 in Kontakt. Das Griffelement 12 bzw. das Hüllgehäuse 34 ist über eine berührunglose formschlüssige Verbindung 30 am Trägerelement 20 gesichert. An einem der Werkzeughalterung abgewandten Ende des Trägerelements 20 ist ein sich radial nach außen erstreckender Bund 42 angeformt. Am Hüllgehäuse 34 ist in axialer Richtung zur Werkzeughalterung vor der Ringnut 40 für das Gaspolster 24 ein sich radial nach innen erstreckender Bund 44 angeformt, der im montierten Zustand den Bund 42 berührungslos hintergreift. Der Bund 42 besitzt einen axialen Abstand zum Bund 44 und einen radialen Abstand zum Hüllgehäuse 34. Das Hüllgehäuse 34 besteht aus zwei Halbschalen und umgreift das Trägerelement 20 bei der Montage.

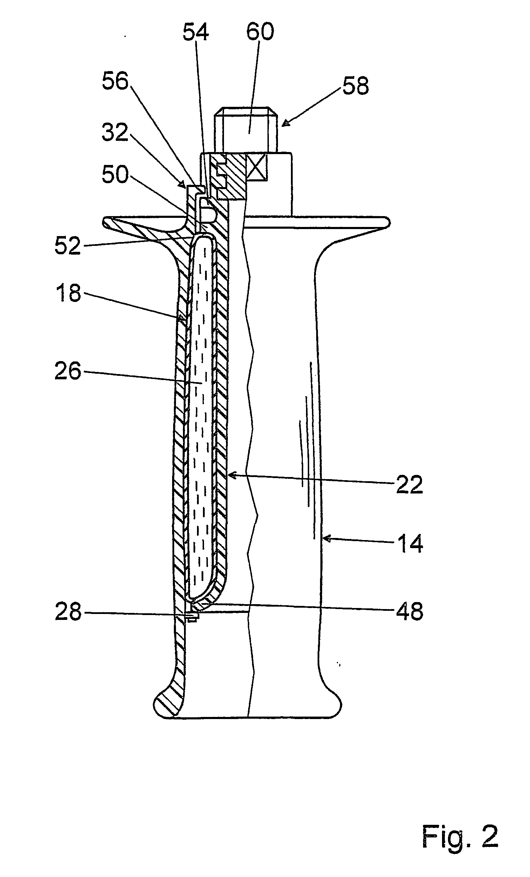

Der Winkelschleifer 10 besitzt ferner auf einer der Werkzeughalterung zugewandten Seite einen sich quer zur Längsrichtung erstreckenden Zusatzhandgriff (Fig. 1 und 2). Der Zusatzhandgriff besitzt ein hülsenförmiges Griffelement 14 aus Kunststoff, das über eine Schwingungsdämpfungseinheit 18 mit einem hülsenförmigen Trägerelement 22 aus Kunststoff verbunden ist. Das Trägerelement 22 besitzt an seinem dem Winkelschleifer zugewandten Ende ein umspritztes Befestigungselement 58 mit einem Gewindebolzen 60, über den das Trägerelement 22 fest in ein nicht näher dargestelltes Innengewinde des Gehäuseteils 36 eingeschraubt werden kann.

Das Griffelement 14 umschließt das Trägerelement 22, wobei zwischen dem Griffelement 14 und dem Trägerelement 22 ein von einem Gaspolster 26 gebildetes ringförmiges Schwingungsdämpfungselement angeordnet ist, das in Längsrichtung des Zusatzhandgriffs einen Großteil des Trägerelements 22 umschließt. Das Gaspolster 26 besitzt eine gasundurchlässige, schlauchförmige Gummihülle mit einem Ventil 28, über das über einen separaten Luftdruckanschluß ein Gasdruck in der Gummihülle auf verschiedene Anwendungsfälle eingestellt werden kann.

In axialer Richtung des Zusatzhandgriffs ist das Gaspolster 26 zwischen zwei sich radial nach außen erstreckenden, an das Trägerelement 22 angeformten Bünden 48, 50 gesichert. Das Griffelement 14 ist axial in die vom Winkelschleifer 10 abgewandte Richtung über einen an seinem Innenumfang sich radial nach innen erstreckenden Bund 52 über das Gaspolster 26 am Trägerelement 22 abgestützt.

Das Griffelement 14 steht ausschließlich über das Gaspolster 26 mit dem Trägerelement 22 in Kontakt und ist über eine berührungslose formschlüssige Verbindung 32 am Trägerelement 22 gesichert. An einem dem Winkelschleifer 10 zugewandten Ende des Trägerelements 22 ist ein sich radial nach außen erstrekkender Bund 54 angeformt. Am Griffelement 14 ist an dem dem Winkelschleifer 10 zugewandten Ende ein sich radial nach innen erstreckender Bund 56 angeformt, der im montierten Zustand den Bund 54 berührungslos hintergreift. Der Bund 54 des Trägerelements 22 besitzt einen axialen Abstand zum Bund 56 und einen radialen Abstand zum Griffelement 14.

### Bezugszeichen

- 10: Werkzeugmaschine
- 12: Griffelement
- 14: Griffelement
- 16: Schwingungsdämpfungsein- heit
- 18: Schwingungsdämpfungsein- heit
- 20: Trägerelement
- 22: Trägerelement
- 24: Gaspolster
- 26: Gaspolster
- 28: Ventil
- 30: Formschlüssige Verbin- dung
- 32: Formschlüssige Verbin- dung
- 34: Hüllgehäuse
- 36: Gehäuseteil
- 38: Ringnut
- 40: Ringnut
- 42: Bund

- 44: Bund

- 46: Betätigungsschalter
- 48: Bund
- 50: Bund
- 52: Bund
- 54: Bund
- 56: Bund

- 58: Befestigungselement

- 60: Gewindebolzen

## Patentansprüche

1. System aus einem Werkzeugmaschinenhandgriff und einer Werkzeugmaschine (10), insbesondere einer elektrisch angetriebenen Handwerkzeugmaschine, wobei der Werkzeugmaschinenhandgriff ein Griffelement (12) aufweist, das über zumindest eine Schwingungsdämpfungseinheit (16) mit einem Trägerelement (20) verbunden und über das Trägerelement (20) an der Werkzeugmaschine (10) befestigt ist, wobei die Schwingungsdämpfungseinheit (16) zumindest ein von einem Gaspolster (24) gebildetes Schwingungsdämpfungselement aufweist und wobei das Griffelement (12) an ein Hüllgehäuse (34) angeformt und das von einem Gaspolster (24) gebildete Schwingungsdämpfungselement in einem Bereich angeordnet ist, in dem sich das Hüllgehäuse (34) und ein Gehäuseteil (36) der Werkzeugmaschine (10) zur Aufnahme eines Motors überlappen, wobei das Hüllgehäuse (34) ausschließlich über das Gaspolster (24) mit dem Trägerelement (20) in Kontakt steht, **dadurch gekennzeichnet, daß** das Hüllgehäuse (34) über eine berührungslose formschlüssige Verbindung (30) am Trägerelement (20) gesichert ist.

2. System nach Anspruch 1, **dadurch gekennzeichnet, daß** das vom Gaspolster (24) gebildete Schwingungsdämpfungselement ein Ventil (28) aufweist, über das ein Gasdruck im Gaspolster (24) veränderbar ist.

3. System nach Anspruch 2, **dadurch gekennzeichnet, daß** der Gasdruck im Gaspolster mit einer integrierten Pumpe veränderbar ist.

4. System nach Anspruch 3, **dadurch gekennzeichnet, daß** die Pumpe über eine Antriebseinheit der Werkzeugmaschine antreibbar ist.

5. System nach einem der vorhergehenden Ansprüche, **dadurch gekennzeichnet, daß** das Griffelement (12) an einem einer Werkzeugaufnahme gegenüberliegenden Ende der Werkzeugmaschine (10) angeordnet ist.

6. System nach einem der vorhergehenden Ansprüche, **dadurch gekennzeichnet, daß** das von einem Gaspolster (24) gebildete Schwingungsdämpfungselement ringförmig ausgeführt ist.

## Claims

1. System consisting of a power tool handle and a power tool (10), in particular an electrically driven portable power tool, wherein the power tool handle has a grip element (12) which is connected to a support element (20) via at least one vibration damping unit (16) and is fastened to the power tool (10) via the support element (20), wherein the vibration damping unit (16) has at least one vibration damping element formed by a gas cushion (24) and wherein the grip element (12) is integrally formed on an envelope housing (34) and the vibration damping element formed by a gas cushion (24) is arranged in a region in which the envelope housing (34) and a housing part (36) of the power tool (10) for accommodating a motor overlap one another, wherein the envelope housing (34) is in contact with the support element (20) solely via the gas cushion (24), **characterized in that** the envelope housing (34) is secured to the support element (20) via a non-contact positive-locking connection (30).

2. System according to Claim 1, **characterized in that** the vibration damping element formed by the gas cushion (24) has a valve (28) via which the gas pressure in the gas cushion (24) can be varied.

3. System according to Claim 2, **characterized in that** the gas pressure in the gas cushion can be varied with an integrated pump.

4. System according to Claim 3, **characterized in that** the pump can be driven via a drive unit of the power tool.

5. System according to one of the preceding claims, **characterized in that** the grip element (12) is arranged on an end of the power tool (10) opposite a tool receptacle.

6. System according to one of the preceding claims, **characterized in that** the vibration damping element formed by a gas cushion (24) is of annular design.

## Revendications

1. Système constitué d'une poignée de machine-outil et d'une machine-outil (10), notamment d'une machine-outil portative à commande électrique, la poignée de machine-outil présentant un élément de préhension (12) qui est connecté par le biais d'au moins une unité d'amortissement des vibrations (16) à un élément de support (20) et qui est fixé par le biais de l'élément de support (20) à la machine-outil (10), l'unité d'amortissement des vibrations (16) présentant au moins un élément d'amortissement des vibrations formé par un coussin de gaz (24) et l'élément de préhension (12) étant façonné sur un boîtier d'enveloppe (34) et l'élément d'amortissement des vibrations formé par un coussin de gaz (24) étant disposé dans une région dans laquelle le boîtier d'enveloppe (34) et une partie de boîtier (36) de la machine-outil (10) recevant un moteur se superposent, le boîtier d'enveloppe (34) étant en contact avec l'élément de support (20) exclusivement par le biais du coussin de gaz (24), **caractérisé en ce que** le boîtier d'enveloppe (34) est fixé sur l'élément de support (20) par le biais d'une connexion sans contact par engagement par correspondance géométrique (30).

2. Système selon la revendication 1, **caractérisé en ce que** l'élément d'amortissement des vibrations formé par le coussin de gaz (24) présente une soupape (28) qui permet de modifier une pression de gaz dans lé coussin de gaz (24).

3. Système selon la revendication 2, **caractérisé en ce que** la pression de gaz dans le coussin de gaz peut être modifiée avec une pompe intégrée.

4. Système selon la revendication 3, **caractérisé en ce que** la pompe peut être entraînée par une unité d'entraînement de la machine-outil.

5. Système selon l'une quelconque des revendications précédentes, **caractérisé en ce que** l'élément de préhension (12) est disposé sur une extrémité de la machine-outil (10) opposée à un porte-outil.

6. Système selon l'une quelconque des revendications précédentes, **caractérisé en ce que** l'élément d'amortissement des vibrations formé par un coussin de gaz (24) est réalisé sous forme annulaire.
